# EUROPEAN PATENT APPLICATION

(11) **EP 4 745 630 A1**
(43) Date of publication of application: **20.05.2026**
(21) Application number: 24839553.5
(22) Date of filing: 28.06.2024
(51) Int. Cl.: G02B 1/115, B32B 7/023, B32B 9/00, B32B 27/00, G02B 1/14

(54) **LIGHT-TRANSMITTING ARTICLE AND METHOD FOR IMPROVING ALKALI RESISTANCE OF LIGHT-TRANSMITTING ARTICLE**

(30) Priority: 10.07.2023 JP 2023112895
(71) Applicant: SHIN-ETSU CHEMICAL CO., LTD., Tokyo 100-0005 (JP)
(72) Inventor: UCHIDA, Takashi, Annaka-shi, Gunma 379-0224 (JP)
(74) Representative: Ter Meer Steinmeister & Partner
(86) International application number: PCT/JP2024/023571
(87) International publication number: WO 2025/013661

(57) **Abstract**

Provided is a light-transmitting article comprising, on an outer surface of a base material, an antireflection layer that has a laminated structure of two or more materials with different refractive indexes, and comprising, on an outer surface of the antireflection layer, a protection layer composed of a material free of fluorine atoms. The variance in visible reflectance at the surface of the article due to the presence or absence of the protection layer is less than 0.5%, and the variance in visible reflectance at the surface of the article before and after the following alkali resistance test is less than 1.0%. With this light-transmitting article, the optical properties of the antireflection layer do not vary before and after formation of the protection layer, whereby an antireflection layer-equipped article (light-transmitting article) having a protection layer is achieved that exhibits excellent alkali resistance.

[Alkali resistance test]

A test article is immersed in a 0.4 mass% aqueous sodium hydroxide solution (test solution) at 55°C and removed from the test solution after three hours. Pure water is poured over the test article for one minute to remove any remaining test solution, and moisture on the surface of the test article is removed by blowing with dry air.

## Description

### TECHNICAL FIELD

This invention relates to a light-transmissive article having an optical surface with improved alkali resistance and a method for improving the alkali resistance of the light-transmissive article. More particularly, it relates to a light-transmissive article comprising a protective layer composed of a fluorine-free material at the outermost surface and an antireflective layer disposed under the protective layer and having a multilayer structure composed of at least two materials having different refractive index wherein the protective layer has no influence on the optical properties of the antireflective layer, and a method for improving the alkali resistance of the light-transmissive article.

### BACKGROUND ART

In image displaying devices such as displays and optical members such as camera lenses, light reflection on the surface becomes causes for light transmission suppression, ambient light glare, and degraded image quality like ghost and flare. Heretofore, an antireflective layer is disposed on the surface of image displaying devices and optical members for preventing light reflection on the surface.

Most antireflective layers are of multilayer structure including alternately stacked high-refractive index layers and low-refractive index layers. The low-refractive index layer is disposed at the outermost surface on the side opposite to the substrate (or air contact side).

Generally, metal oxides and nitrides such as titanium oxide (TiO₂), niobium oxide (Nb₂O₅), zirconium oxide (ZrO₂), and silicon nitride (Si₃N₄) are used as the high-refractive index layer. Silicon dioxide (SiO₂) and magnesium fluoride (MgF₂) are used as the low-refractive index layer.

In general, the thickness of high- and low-refractive index layers is smaller than the wavelength of light to be prevented from reflection. For obtaining high antireflective performance, it is necessary to precisely control the refractive index and thickness of layers during layer formation.

In addition, since the antireflective layer is disposed at the outermost surface, it must be durable against friction and chemicals (see Patent Document 1: JP-A 2021-092768). If friction or chemicals cause the antireflective layer to partially spall off or change its thickness, the reflectance is changed. Sometimes, the reflectance becomes higher than that of the substrate.

For such reason, in the prior art, a protective layer is disposed on the air side surface (outer surface) of the antireflective layer (Patent Document 2: JP-A 2011-069995, Patent Document 3: JP-A 2011-100111, and Patent Document 4: JP-A 2020-060657). As the protective layer which is thin enough not to influence the optical properties of the antireflective layer and durable, a thin film of a fluorinated organosilicon compound having a thickness of about 10 nm is used. It is known that some organic fluorine compounds accumulate within the environment and living bodies including human bodies and are harmful while other organic fluorine compounds are not fully understood for their harm. There is a need for substitutes for overall organic fluorine compounds. However, thin films formed of materials other than fluorinated materials fail to be fully durable when they are thin enough not to influence the optical properties of the antireflective layer.

### PRIOR ART DOCUMENTS

### PATENT DOCUMENTS

| | |
|---|---|
| Patent Document 1: | JP-A 2021-092768 |
| Patent Document 2: | JP-A 2011-069995 |
| Patent Document 3: | JP-A 2011-100111 |
| Patent Document 4: | JP-A 2020-060657 |
| Patent Document 5: | JP-A 2007-284791 |
| Patent Document 6: | JP 4834939 |
| Patent Document 7: | JP 7121070 |
| Patent Document 8: | JP 7217118 |
| Patent Document 9: | JP 7389259 |

### SUMMARY OF INVENTION

### TECHNICAL PROBLEM

An object of the invention, which has been made under the above-mentioned circumstances, is to provide a light-transmissive article comprising a protective layer composed of a fluorine-free material at the outermost surface and presenting an optical surface having improved durability, especially alkali resistance, and a method for improving the alkali resistance of a light-transmissive article.

### SOLUTION TO PROBLEM

Making extensive investigations to attain the above object, the inventor has found that a light-transmissive article having an antireflective layer, in which a protective layer composed of a fluorine-free material (preferably a cured product layer of a water-repellent fluorine-free organosilicon compound containing a hydrolyzable group and/or a metal oxide layer) is disposed on the surface of the article, wherein provided that the article has a luminous reflectance on its surface, a change of the luminous reflectance in the presence or absence of the protective layer is less than 0.5%, and a change of the luminous reflectance before and after an alkali resistance test (to be described later) is less than 1.0%, experiences no change of the optical properties of the antireflective layer before and after formation of the protective layer, and that the antireflective layer-bearing article having the protective layer thereon (i.e., light-transmissive article) is improved in alkali resistance. The invention is predicated on this finding.

Accordingly, the invention provides a light-transmissive article and a method for improving the alkali resistance of a light-transmissive article, as defined below.
[1] A light-transmissive article comprising a substrate having an outer surface, an antireflective layer of multilayer structure disposed on the outer surface of the substrate and composed of at least two materials having different refractive index, and a protective layer disposed on the outer surface of the antireflective layer and composed of a fluorine-free material,
   the article having a luminous reflectance on its surface, a change of the luminous reflectance in the presence or absence of the protective layer is less than 0.5%, and a change of the luminous reflectance before and after an alkali resistance test is less than 1.0%.

### [Alkali resistance test]

The alkali resistance test includes immersing an article sample in a test solution in the form of 0.4 wt% aqueous sodium hydroxide solution at 55°C, taking the sample out of the test solution after 3 hours, pouring pure water over the sample for 1 minute to remove the test solution, and blowing dry air to the sample to remove any water from the sample surface.

The light-transmissive article of [1] wherein the protective layer is a cured product layer of a water-repellent fluorine-free organosilicon compound containing a hydrolyzable group and/or a metal oxide layer.

The light-transmissive article of [2] wherein the water-repellent fluorine-free organosilicon compound containing a hydrolyzable group is selected from compounds having the formulae (1) to (3): 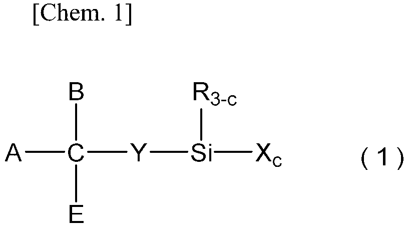 wherein A is a C₁-C₅₀ monovalent hydrocarbon group, B is hydrogen or hydroxy, E is hydrogen or a C₁-C₅₀ monovalent hydrocarbon group, the total number of carbon atoms in A and E is at least 12, Y is a single bond or a divalent hydrocarbon group which may contain at least one selected from silicon and siloxane bond, R is a C₁-C₄ alkyl group or phenyl group, X is independently a hydrolyzable group, c is 2 or 3, 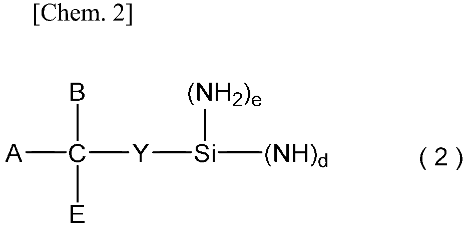 wherein A, B, E, and Y are as defined above, e is a number of 0 to 3, d is (3-e)/2; when e=3, formula (2) is the molecular formula of a monomer and when e<3, formula (2) is the compositional formula of a polymer, 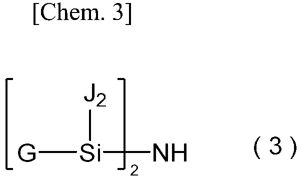 wherein G is independently a C₈-C₅₀ monovalent hydrocarbon group, and J is independently hydrogen, hydroxy or methyl.

The light-transmissive article of any one of [1] to [3] wherein the protective layer is a cured product layer of a water-repellent fluorine-free organosilicon compound containing a hydrolyzable group and has a contact angle with water of at least 90° on its surface.

The light-transmissive article of any one of [1] to [4] wherein the protective layer is a cured product layer of a water-repellent fluorine-free organosilicon compound containing a hydrolyzable group and has a thickness of 1 nm to 10 nm.

The light-transmissive article of [2] wherein the metal oxide is an oxide of at least one metal selected from zirconium, niobium, hafnium, and tantalum.

The light-transmissive article of [1], [2] or [6] wherein the protective layer is a metal oxide layer and has a contact angle with water of less than 65° on its surface.

The light-transmissive article of [1], [2], [6] or [7] wherein the protective layer is a metal oxide layer and has a thickness of 1 nm to less than 10 nm.

The light-transmissive article of [1] to [3] or [6] wherein the protective layer is composed of at least two layers including a metal oxide layer and a cured product layer of a water-repellent fluorine-free organosilicon compound containing a hydrolyzable group, the cured product layer of a water-repellent fluorine-free organosilicon compound containing a hydrolyzable group provides the outermost surface of the protective layer, and the protective layer has a contact angle with water of at least 90° on its surface.

A method for improving the alkali resistance of a light-transmissive article comprising a substrate, an antireflective layer of multilayer structure disposed on the substrate and composed of at least two materials having different refractive index, and a protective layer disposed on the antireflective layer, wherein the antireflective performance of the article is restrained from changing,
the method comprising the steps of forming the protective layer from a cured product layer of a water-repellent fluorine-free organosilicon compound containing a hydrolyzable group and/or a metal oxide layer, and setting the protective layer to a thickness of 1 nm to 10 nm.

The method for improving the alkali resistance of a light-transmissive article whose antireflective performance is restrained from changing, according to [10] wherein the water-repellent fluorine-free organosilicon compound containing a hydrolyzable group is selected from compounds having the formulae (1) to (3): 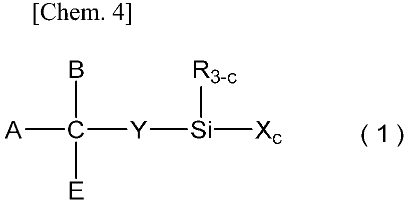 wherein A is a C₁-C₅₀ monovalent hydrocarbon group, B is hydrogen or hydroxy, E is hydrogen or a C₁-C₅₀ monovalent hydrocarbon group, the total number of carbon atoms in A and E is at least 12, Y is a single bond or a divalent hydrocarbon group which may contain at least one selected from silicon and siloxane bond, R is a C₁-C₄ alkyl group or phenyl group, X is independently a hydrolyzable group, c is 2 or 3, 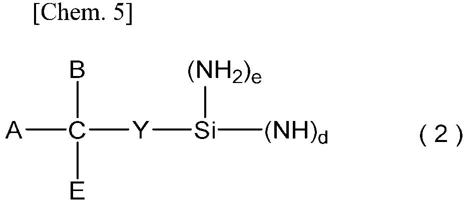 wherein A, B, E, and Y are as defined above, e is a number of 0 to 3, d is (3-e)/2; when e=3, formula (2) is the molecular formula of a monomer and when e<3, formula (2) is the compositional formula of a polymer, 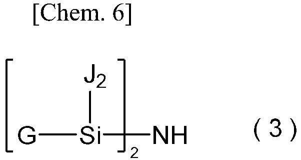 wherein G is independently a C₈-C₅₀ monovalent hydrocarbon group, and J is independently hydrogen, hydroxy or methyl.

The method for improving the alkali resistance of a light-transmissive article whose antireflective performance is restrained from changing, according to [10] wherein the metal oxide is an oxide of at least one metal selected from zirconium, niobium, hafnium, and tantalum.

### ADVANTAGEOUS EFFECTS OF INVENTION

The light-transmissive article bearing an antireflective layer and having a protective layer of a fluorine-free material disposed on its surface, wherein a change of the luminous reflectance on the article surface in the presence or absence of the protective layer is less than 0.5%, and a change of the luminous reflectance before and after an alkali resistance test (to be described later) is less than 1.0%, is improved in alkali resistance while the protective layer does not influence the optical properties of the antireflective layer.

### DESCRIPTION OF EMBODIMENTS

The invention provides a light-transmissive article characterized by comprising a substrate having an outer surface, an antireflective layer of multilayer structure disposed on the outer surface of the substrate and composed of at least two materials having different refractive index, and a protective layer disposed on the outer surface of the antireflective layer and composed of a fluorine-free material, wherein provided that the article has a luminous reflectance on its surface, a change of the luminous reflectance in the presence or absence of the protective layer is less than 0.5%, and a change of the luminous reflectance before and after an alkali resistance test (to be described later) is less than 1.0%.

The light-transmissive article of the invention is composed of a substrate, an antireflective layer, and a protective layer.

### [Substrate]

The substrate which can be used herein is not particularly limited as long as it is light transmissive. The substrate may be made of various materials such as glass, plastics, ceramics and quartz. Substrates made of such materials as the base and having a functional layer thereon are also acceptable. Exemplary functional layers include antistatic layers and hard coat layers. The substrate may be of plate, film or other shape. In particular, transparent glass plates, hard coat-bearing plastic plates, and hard coat-bearing plastic films are advantageously used as the substrate.

The substrate surface may be pre-treated before the antireflective layer is formed. The pretreatment achieves tight bond between the substrate and the antireflective layer, leading to high durability.

The method of pretreatment of the substrate is not particularly limited as long as any contaminants on the substrate surface are removed and the substrate surface is made hydrophilic. Examples of the pretreatment include treatment with alcohols such as ethanol and 2-propanol, treatment with alkaline cleaning agents, treatment with oxygen or argon plasma, and treatment with OH radicals. These treatments may be combined. Of these, treatment with alkaline cleaning agents is preferred, and treatment with plasma or OH radicals is more preferred. Even more preferably, treatment with alkaline cleaning agents is followed by treatment with plasma or OH radicals.

The effectiveness of pretreatment of the substrate is confirmed by the hydrophilicity of the substrate surface. The hydrophilicity can be evaluated by a contact angle with water on the substrate. The contact angle is preferably up to 40°, more preferably up to 20°, and even more preferably up to 10°. Notably, the contact angle with water is measured according to JIS R 3257: 1999.

### [Antireflective layer]

The antireflective layer has a multilayer structure composed of at least two materials having different refractive index, i.e., multilayer structure of alternately stacked high- and low-refractive index layers. Metal oxides and nitrides such as titanium oxide (TiO₂), niobium oxide (Nb₂O₅), zirconium oxide (ZrO₂), and silicon nitride (Si₃N₄) are used as the high-refractive index layer, with niobium oxide (Nb₂O₅) being preferred. Silicon dioxide (SiO₂) and magnesium fluoride (MgF₂) are used as the low-refractive index layer, with silicon dioxide (SiO₂) being preferred

### Formation of antireflective layer

The antireflective layer may be formed using a dry film deposition method or wet film deposition method. Examples of the dry film deposition method include vacuum evaporation, sputtering, and chemical vapor deposition (CVD). Examples of the wet film deposition method include spraying method using metal oxide nanoparticles or metal alkoxide as a precursor, spin coating, dipping, brush coating, gravure coating, and bar coating. In the practice of the invention, preference is given to the dry film deposition method.

As the vacuum evaporation method, a mode of heating a material to be evaporated, for example, resistance heating mode or electron beam heating mode may be used. Also, heating of evaporation material and plasma ion beam irradiation (ion-assisted evaporation) may be used. For example, the antireflective layer via EB evaporation or ion-assisted evaporation can be formed by a method as described in Patent Document 3.

As the sputtering method, a mode of sputtering a target material (or material to be deposited), for example, RF plasma mode, DC plasma mode or ion beam mode may be used. Also, heating of evaporation material, plasma ion beam irradiation (ion-assisted or radial-assisted), and reactive sputtering involving supply of reactive gas such as oxygen or nitrogen gas are useful. For example, the antireflective layer via sputtering can be formed by a method as described in Patent Document 4.

As the CVD method, thermal CVD, plasma-assisted CVD and photo-induced CVD may be used. For example, the layer can be formed by a method as described in Patent Document 5 (JP-A 2007-284791).

The antireflective layer preferably has an (overall) thickness of 100 to 1,000 nm, more preferably 200 to 500 nm. If the overall antireflective layer is too thin, a low optical reflectance over the entire wavelength range of visible light is not available in some cases. If the layer is too thick, there is an increased likelihood of cracking or spalling from the substrate and in some cases, uniform light reflection properties within the antireflective layer are not available. The thickness of the antireflective layer can be measured by cross-sectional observation under a scanning electron microscope or transmission electron microscope.

The surface of the antireflective layer may be pre-treated before the protective layer is formed. The pretreatment achieves tight bond between the antireflective layer and the protective layer, leading to high durability.

The method of pretreatment of the antireflective layer is not particularly limited as long as any contaminants on the antireflective layer surface are removed. For example, treatment with oxygen plasma, argon plasma and OH radicals may be advantageously used.

As the antireflective layer-bearing substrate on which the protective layer is to be formed, for example, the substrates described in Patent Document 2 (JP-A 2011-069995), Patent Document 3 (JP-A 2011-100111), Patent Document 4 (JP-A 2020-060657), Patent Document 6 (JP 4834939), Patent Document 7 (JP 7121070), Patent Document 8 (JP 7217118), and Patent Document 9 (JP 7389259) may be used.

### [Protective layer]

The protective layer is formed of a fluorine-free material. It is preferably composed of a cured product layer of a water-repellent fluorine-free organosilicon compound having a hydrolyzable group or a metal oxide layer or two or more of these layers.

### Cured product layer of water-repellent fluorine-free organosilicon compound having hydrolyzable group

The cured product layer of a water-repellent fluorine-free organosilicon compound having a hydrolyzable group is formed from a protective layer-forming composition containing a water-repellent fluorine-free organosilicon compound having a hydrolyzable group.

### (Water-repellent fluorine-free organosilicon compound having a hydrolyzable group)

The water-repellent fluorine-free organosilicon compound having a hydrolyzable group is preferably a compound having a hydrolyzable silyl group at one end or both ends of a hydrocarbon group, or a compound having a hydrocarbon group and a silicon-bonded hydrolyzable group, wherein the hydrocarbon group may be straight or branched, and the total of carbon atoms in the hydrocarbon group is 12 or more.

The water-repellent fluorine-free organosilicon compound containing a hydrolyzable group preferably has the formula (1), (2) or (3). Notably formula (2) is the molecular formula of a monomer or compositional formula of a polymer.

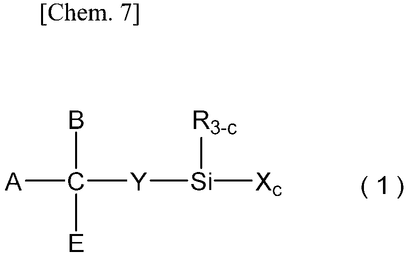

Herein A is a C₁-C₅₀ monovalent hydrocarbon group, B is hydrogen or hydroxy, E is hydrogen or a C₁-C₅₀ monovalent hydrocarbon group, the total number of carbon atoms in A and E is at least 12, Y is a single bond or a divalent hydrocarbon group which may contain at least one selected from silicon and siloxane bond, R is a C₁-C₄ alkyl group or phenyl group, X is independently a hydrolyzable group, and c is 2 or 3.

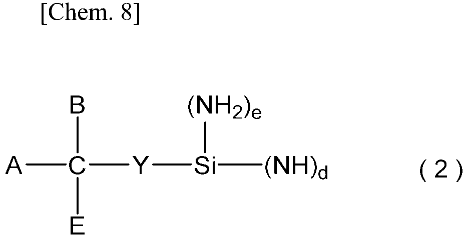

Herein A, B, E, and Y are as defined above, e is a number of 0 to 3, d is (3-e)/2; when e=3, formula (2) is the molecular formula of a monomer and when e<3, formula (2) is the compositional formula of a polymer.

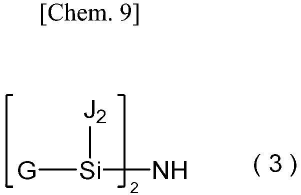

Herein G is independently a C₈-C₅₀ monovalent hydrocarbon group, and J is independently hydrogen, hydroxy or methyl.

In formulae (1) and (2), A is a C₁-C₅₀, preferably C₁₀-C₅₀ monovalent hydrocarbon group, B is hydrogen or hydroxy, E is hydrogen or a C₁-C₅₀, preferably C₁₀-C₅₀ monovalent hydrocarbon group. Examples of the C₁-C₅₀ monovalent hydrocarbon group represented by A and E are shown below.

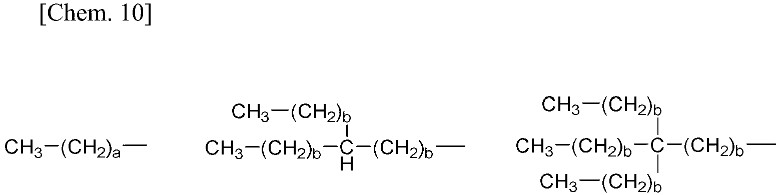

Herein "a" is an integer of 0 to 49, preferably 9 to 49, and b is each independently an integer of at least 1 such that the total of carbon atoms in each structure may be up to 50, preferably 1 to 43.

A is preferably a C₁₀-C₅₀ straight saturated monovalent hydrocarbon group, B is preferably hydroxy, and E is preferably a C₁₀-C₅₀ straight saturated monovalent hydrocarbon group.

It is noted that in formulae (1) and (2), the total of carbon atoms in A and E is at least 12, preferably 20 to 60.

In formulae (1) and (2), Y is a single bond or a divalent hydrocarbon group which may contain at least one selected from silicon and siloxane bond, preferably of 1 to 20 carbon atoms. Examples of the divalent hydrocarbon group include C₁-C₂₀, preferably C₁-C₁₀ alkylene groups, C₁-C₁₀ alkylene groups containing C₆-C₈ arylene group (e.g., C₇-C₁₈ alkylene-arylene groups), divalent groups having C₁-C₈ alkylene groups bonded via a diorganosilylene group, silalkylene structure or silarylene structure, and divalent groups having a C₁-C₁₀ alkylene group bonded to the valence bond of of a straight organopolysiloxane residue of 2 to 10 silicon atoms, especially 2 to 8 silicon atoms, and the valence bond of a branched or cyclic organopolysiloxane residue of 3 to 10 silicon atoms, especially 3 to 8 silicon atoms.

The groups bonded to a silicon atom in diorganosilylene groups, silalkylene structures, silarylene structures, and organopolysiloxane residues are preferably C₁-C₈, more preferably C₁-C₄ alkyl groups such as methyl, ethyl, propyl and butyl, and phenyl groups. The alkylene group in the silalkylene structure is preferably a group of 2 to 6 carbon atoms, more preferably 2 to 4 carbon atoms, such as ethylene, propylene (trimethylene and methylethylene), and butylene (tetramethylene and methylpropylene). The organopolysiloxane residue may contain a silalkylene structure having two silicon atoms bonded by an alkylene group such as ethylene or propylene.

Exemplary groups of Y are shown below. It is noted that in the following structure, preferably the valence bond on the left is bonded to a carbon atom and the valence bond on the right is bonded to a silicon atom.

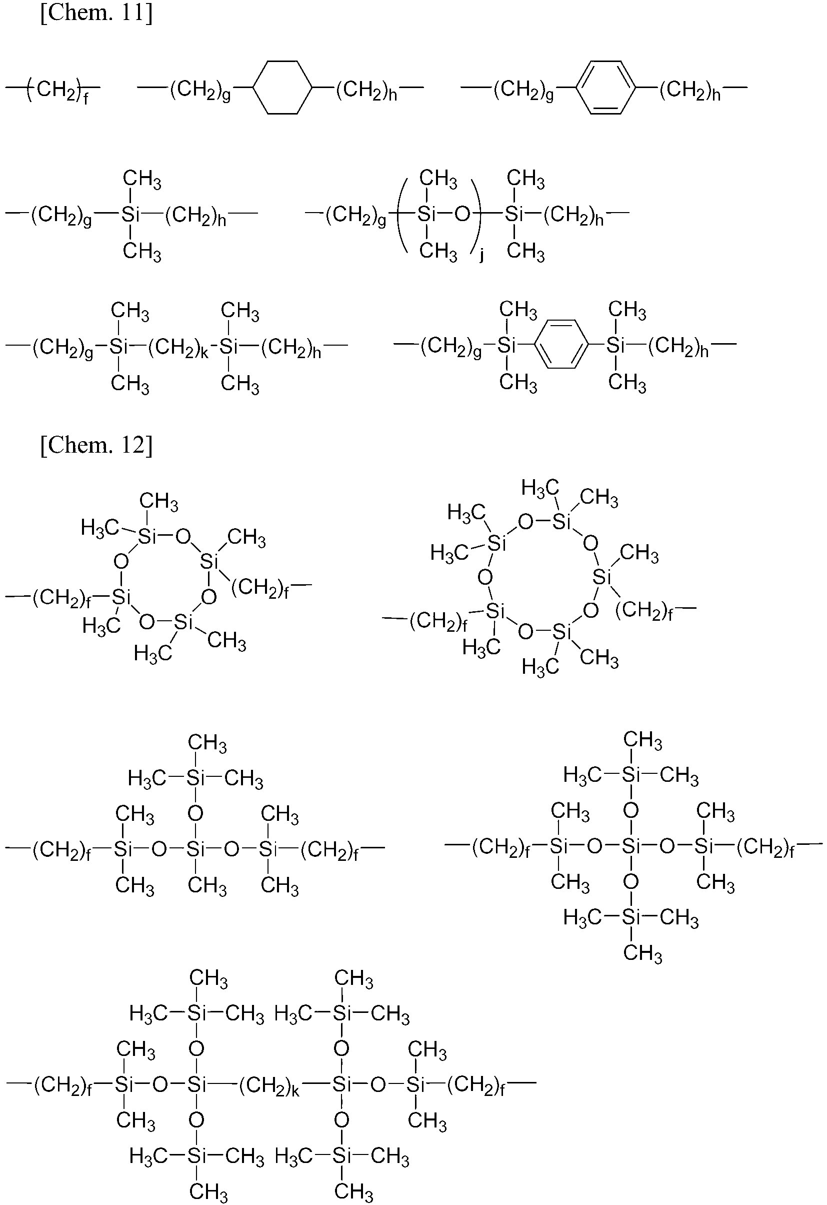

Herein, f is independently an integer of 1 to 10, g and h are each independently an integer of 1 to 8, the sum of g and h is an integer of 2 to 10, j is an integer of 1 to 9, and k is an integer of 2 to 4.

In formula (1), X is independently a hydrolyzable group. Suitable hydrolyzable groups include C₁-C₁₀ alkoxy groups such as methoxy, ethoxy, propoxy, isopropoxy, butoxy, isobutoxy, sec-butoxy, and tert-butoxy, C₂-C₁₀ alkoxy-substituted alkoxy groups such as methoxymethoxy, methoxyethoxy, ethoxymethoxy and ethoxyethoxy, C₂-C₁₀ acyloxy groups such as acetoxy and propionoxy, C₂-C₁₀ alkenyloxy groups such as vinyloxy, allyloxy, propenoxy and isopropenoxy, and halogens such as chloro, bromo and iodo. Inter alia, methoxy, ethoxy, isopropenoxy and chloro are preferred.

In formula (1), R is a C₁-C₄ alkyl group or phenyl, with methyl and ethyl being preferred.

In formula (1), c is 2 or 3, preferably 3.

In formula (2), e is a number of 0 to 3, specifically 0 or a positive number of up to 3, preferably a number of 0 to 2, most preferably 0; and d is (3-e)/2, preferably 1.5. When e=3, formula (2) is the molecular formula of a monomer and when e<3, formula (2) is the compositional formula of a polymer.

In formula (3), G is independently a C₈-C₅₀, preferably C₁₀-C₃₆, more preferably C₁₂-C₂₈ monovalent hydrocarbon group, examples of which are shown below.

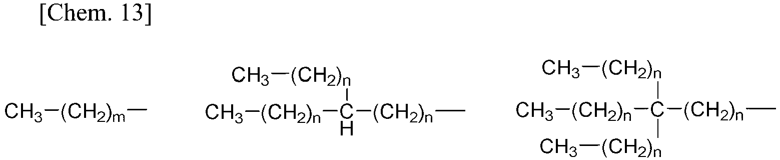

Herein m is an integer of 7 to 49, preferably 9 to 35, more preferably 11 to 27; n is independently an integer of at least 1 such that the total of carbon atoms in each structure may be 8 to 50, preferably 10 to 36, more preferably 12 to 28.

In formula (3), J is independently hydrogen, hydroxy or methyl, with methyl being preferred.

Examples of the compound having formula (1) include octadecyltrimethoxysilane, octadecyltrichlorosilane, octadecyltriethoxysilane, dodecyltrimethoxysilane, triacontyltrichlorosilane, and the compound shown below.

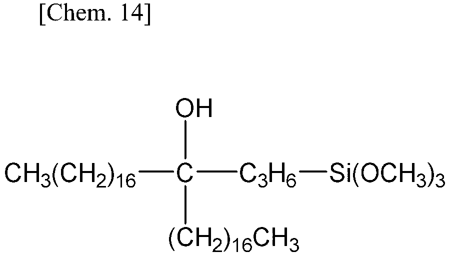

Examples of the compound having formula (2) include the compounds shown below.

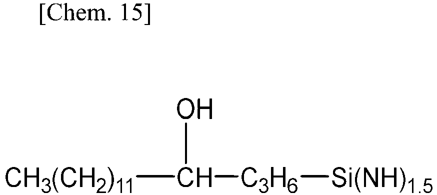

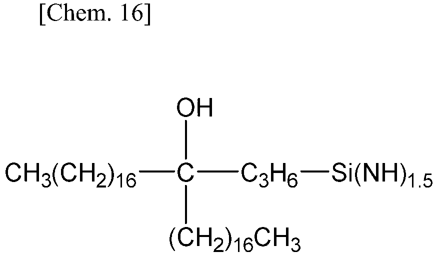

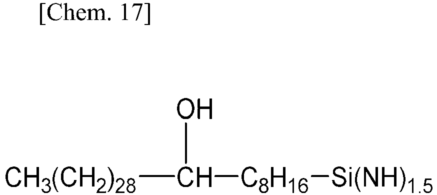

Examples of the compound having formula (3) include 1,3-dioctadecyl-1,1,3,3-tetramethyldisilazane, 1,3-didodecyl-1,1,3,3-tetramethyldisilazane, 1,3-didecyl-1,1,3,3-tetramethyldisilazane, and 1,3-dioctyl-1,1,3,3-tetramethyldisilazane.

For the preparation of the compound having formula (1) wherein E is a C₁-C₅₀ monovalent hydrocarbon group, the following methods are exemplary.

The desired compound can be prepared by mixing a hydrocarbon end group-bearing compound having an alkenyl group at an end and a compound having a SiH group and a hydrolyzable silyl group and effecting hydrosilation addition reaction in the presence of a hydrosilation reaction catalyst (Preparation method 1).

The desired compound can also be prepared by mixing a hydrocarbon end group-bearing compound having a SiH group at an end and a compound having an alkenyl group and a hydrolyzable silyl group and effecting hydrosilation addition reaction in the presence of a hydrosilation reaction catalyst (Preparation method 2).

Exemplary of the hydrocarbon end group-bearing compound having an alkenyl group at an end is a compound having the formula (1a).

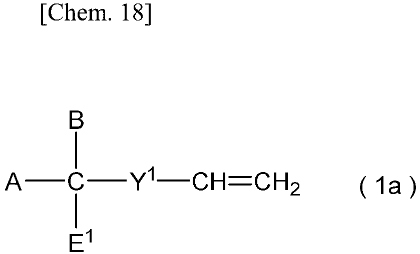

Herein A and B are as defined above, E¹ is a C₁-C₅₀ monovalent hydrocarbon group, the total of carbon atoms in A and E¹ is at least 12, and Y¹ is a divalent hydrocarbon group, preferably of 1 to 18 carbon atoms, which may contain at least one selected from silicon atom and siloxane bond.

In formula (1a), E¹ is a C₁-C₅₀ monovalent hydrocarbon group, examples of which are as described above for the C₁-C₅₀ monovalent hydrocarbon group E.

In formula (1a), Y¹ is a divalent hydrocarbon group, preferably of 1 to 18 carbon atoms, which may contain at least one selected from silicon atom and siloxane bond, examples of which are shown below. In the following structure, preferably the valence bond on the left is bonded to the carbon atom to which A, B and E¹ are bonded and the valence bond on the right is bonded to the vinyl group.

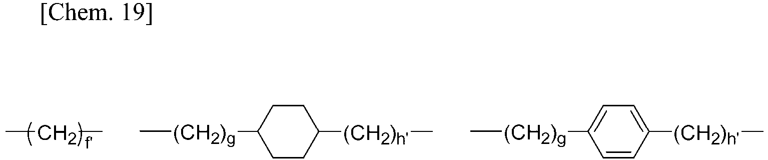

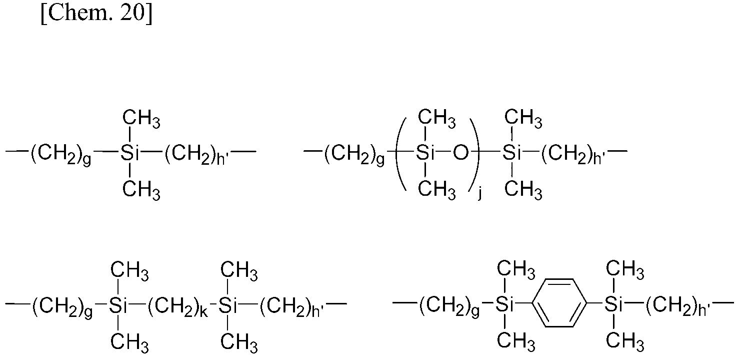

Herein, g, j and k are as defined above, f' is an integer of 0 to 8, h' is an integer of 0 to 6, and the sum of g and h' is an integer of 2 to 8.

Examples of the compound having the formula (1a) are shown below.

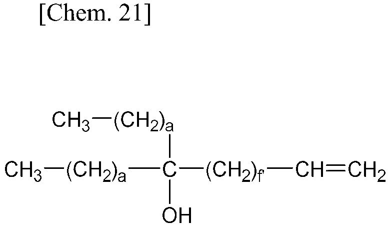

Herein a and f' are each independently as defined above.

Examples of the compound having a SiH group and a hydrolyzable silyl group include trimethoxysilane, triethoxysilane, triacetoxysilane, and trichlorosilane.

In Preparation Method 1, the amount of the compound having a SiH group and a hydrolyzable silyl group is preferably 1 to 6 moles, more preferably 1.5 to 4 moles per mole of alkenyl group in the hydrocarbon end group-bearing compound having an alkenyl group at an end.

Exemplary of the hydrocarbon end group-bearing compound having a SiH group at an end is a compound having the formula (1b).

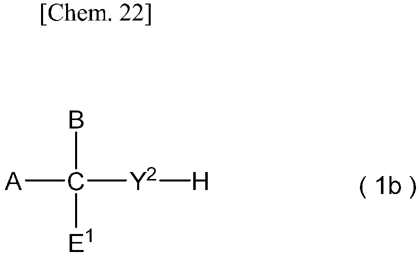

Herein A, B and E¹ are as defined above, and Y² is a divalent hydrocarbon group containing silicon or siloxane bond.

In formula (1b), Y² is a divalent hydrocarbon group containing silicon or siloxane bond, examples of which are shown below. In the following structure, preferably the valence bond on the left is bonded to the carbon atom and the valence bond on the right is bonded to the hydrogen atom.

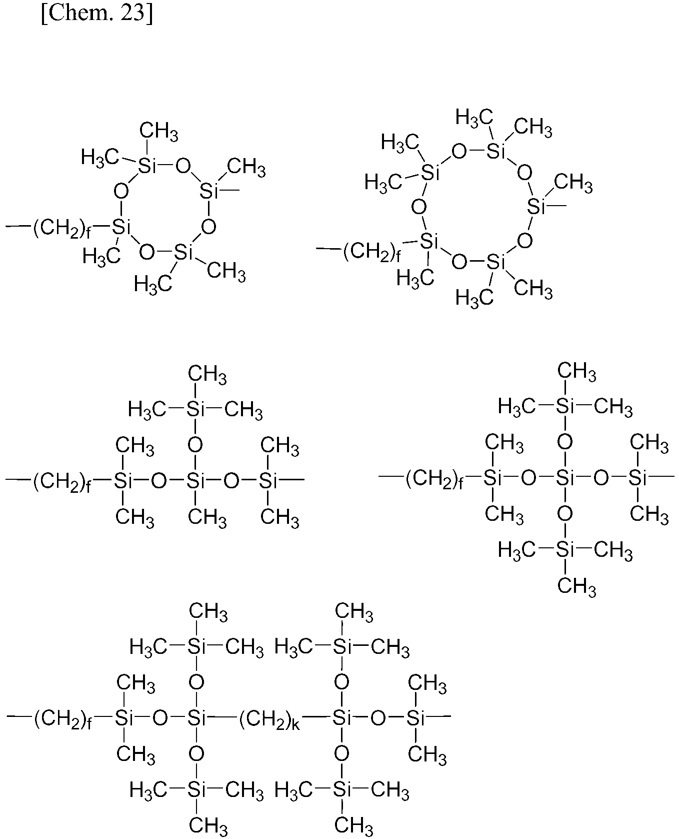

Herein, f and k are as defined above.

Examples of the compound having formula (1b) are shown below.

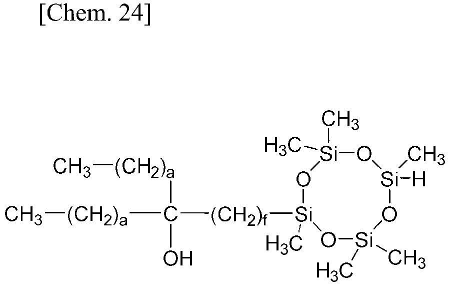

Herein, a and f are each independently as defined above.

Examples of the compound having an alkenyl group and a hydrolyzable silyl group include vinyltrimethoxysilane, allyltrimethoxysilane, and octenyltrimethoxysilane.

In Preparation Method 2, the amount of the compound having an alkenyl group and a hydrolyzable silyl group is preferably 1 to 5 moles, more preferably 1 to 3 moles per mole of SiH group in the hydrocarbon end group-bearing compound having a SiH group at an end.

Examples of the hydrosilation reaction catalyst used in Preparation Methods 1 and 2 include platinum group metal-based catalysts such as platinum black, chloroplatinic acid, alcohol-modified chloroplatinic acid, complexes of chloroplatinic acid with olefins, aldehydes, vinylsiloxanes and acetylene alcohols, tetrakis(triphenylphosphine)palladium and chlorotris(triphenylphosphine)rhodium. Of these, platinum-based compounds such as vinylsiloxane-coordination compounds are preferred. It is noted that the platinum-based compounds are preferably dissolved in toluene, lower alcohols, higher alcohols and silicones prior to use.

The amount of the hydrosilation reaction catalyst used is preferably to provide 0.001 to 1,000 ppm, more preferably 0.01 to 100 ppm by weight of transition metal based on the weight of the hydrocarbon end group-bearing compound having an alkenyl or SiH group at an end.

In Preparation Methods 1 and 2, the reaction may be performed in a solvent. Examples of the solvent include aromatic hydrocarbons such as toluene and xylene, aliphatic or alicyclic hydrocarbons such as n-pentane, n-hexane and cyclohexane, cyclic ethers such as tetrahydrofuran and dioxane, and ketones such as acetone and methyl ethyl ketone.

The amount of the solvent used is preferably 0 to 1,000 parts by weight, more preferably 50 to 200 parts by weight per 100 parts by weight of the hydrocarbon end group-bearing compound having an alkenyl or SiH group at an end.

In Preparation Methods 1 and 2, the conditions for the reaction of the hydrocarbon end group-bearing compound having an alkenyl group at an end with the compound having a SiH group and a hydrolyzable silyl group and the conditions for the reaction of the hydrocarbon end group-bearing compound having a SiH group at an end with the compound having an alkenyl group and a hydrolyzable silyl group preferably include 20 to 120°C, especially 60 to 100°C and 0.5 to 72 hours, especially 1 to 36 hours.

For the preparation of the compound having formula (2) wherein E is a C₁-C₅₀ monovalent hydrocarbon group, the following method is exemplary.

The desired compound can be prepared by mixing a hydrocarbon end group-bearing compound having an alkenyl group at an end with trichlorosilane, reacting them in the presence of a hydrosilation reaction catalyst, and reacting the reaction product with ammonia gas.

The reaction product of a hydrocarbon end group-bearing compound having an alkenyl group at an end with trichlorosilane may be prepared by the same method as Preparation Method 1.

In the method for preparing the compound having formula (2), the amount of ammonia gas used is preferably 1 to 300 cc/min, more preferably 30 to 200 cc/min.

In the method for preparing the compound having formula (2), the conditions for the reaction of the reaction product of a hydrocarbon end group-bearing compound having an alkenyl group at an end with trichlorosilane with ammonia gas preferably include room temperature (23±15°C, the same holds true, hereinafter), especially 20 to 30°C and 2 to 36 hours, especially 4 to 12 hours.

### (Protective layer-forming composition comprising water-repellent fluorine-free organosilicon compound containing hydrolyzable group)

To the protective layer-forming composition comprising a water-repellent fluorine-free organosilicon compound containing a hydrolyzable group, a hydrolytic condensation catalyst may be added if necessary, for example, organotin compounds (e.g., dibutyltin dimethoxide and dibutyltin dilaurate), organotitanium compounds (e.g., tetra-n-butyl titanate), organic acids (e.g., acetic acid, methanesulfonic acid and fluorine-modified carboxylic acids), and inorganic acids (e.g., hydrochloric acid and sulfuric acid). Of these, acetic acid, tetra-n-butyl titanate and dibutyltin dilaurate are desirable. The addition amount is a catalytic amount, typically 0.01 to 5 parts by weight, especially 0.1 to 1 part by weight per 100 parts by weight of the water-repellent fluorine-free organosilicon compound containing a hydrolyzable group.

The protective layer-forming composition comprising a water-repellent fluorine-free organosilicon compound containing a hydrolyzable group may contain a solvent. The solvent is preferably a non-fluorinated one. The preferred solvents include hydrocarbon solvents (e.g., petroleum benzine, mineral spirits, toluene and xylene), ketone solvents (e.g., acetone, methyl ethyl ketone and methyl isobutyl ketone), alcohol solvents (e.g., ethanol, 1-propanol, 2-propanol, and butanol), and ether solvents (e.g., tetrahydrofuran (THF), monoethylene glycol dimethyl ether, diethylene glycol dimethyl ether, triethylene glycol dimethyl ether, tetraethylene glycol dimethyl ether and dioxane).

The solvents may be used in admixture of two or more. The solvent in which the water-repellent fluorine-free organosilicon compound containing a hydrolyzable group is uniformly dissolved is preferred. The optimum concentration of the water-repellent fluorine-free organosilicon compound containing a hydrolyzable group in the solvent may be selected depending on how to use the protective layer-forming composition and is not particularly limited. The compound is typically dissolved in a concentration of 0.01 to 30% by weight, preferably 0.02 to 25% by weight, more preferably 0.05 to 20% by weight.

### Metal oxide layer

Examples of the metal constituting the metal oxide layer include zirconium, niobium, hafnium and tantalum.

The metal oxide layer is formed using a protective layer-forming composition comprising metal oxide nanoparticles or a precursor which can be converted to metal oxide salt or metal oxide. Notably, in the context of the invention, the metal oxide does not include silicon oxide.

### (Metal oxide nanoparticles)

Examples of the metal oxide nanoparticles include nanoparticles of zirconium oxide (ZrOₓ), niobium oxide (NbₓO_{y}), hafnium oxide (HfOₓ), and tantalum oxide (TaₓO_{y}).

The particles preferably have an average diameter of 1 to 10 nm, more preferably 2 to 8 nm. The average particle diameter is measured by the dynamic light scattering method according to JIS Z 8828: 2019.

As the metal oxide nanoparticles, commercially available products may be used, for example, Zirconeo (ITEC Co., Ltd.) and Biral Nb-G6000 (Taki Chemical Co., Ltd.).

### (Precursor which can be converted to metal oxide salt or metal oxide)

Examples of the precursor which can be converted to metal oxide salt or metal oxide include ammonium zirconium carbonate, zirconium acetate, zirconium oxynitrate, zirconium nitrate, zirconium oxychloride, zirconium chloride hydroxide, ammonium niobium oxalate, niobium oxalate and tantalum oxalate.

As the precursor, commercially available products may be used, for example, Beicoat 20 (Nippon Light Metal Co., Ltd.), ammonium niobium oxalate (Taniobis), and tantalum oxalate (Taniobis).

### (Protective layer-forming composition comprising metal oxide nanoparticles or a precursor which can be converted to metal oxide salt or metal oxide)

The protective layer-forming composition comprising metal oxide nanoparticles or a precursor which can be converted to metal oxide salt or metal oxide may contain a diluent. The diluent is preferably selected from water (e.g., distilled water, deionized water, purified water and ultrapure water), ketone solvents (e.g., acetone, methyl ethyl ketone and methyl isobutyl ketone) and alcohol solvents (e.g., ethanol, 1-propanol, 2-propanol and butanol). Water is most preferred.

The diluent may be used in admixture of two or more. The diluent in which the metal oxide nanoparticles are uniformly dispersed or the precursor which can be converted to metal oxide salt or metal oxide is uniformly dissolved is preferred. The optimum concentration of the metal oxide nanoparticles or the precursor which can be converted to metal oxide salt or metal oxide dispersed or dissolved in the diluent may be selected depending on how to use the protective layer-forming composition and is not particularly limited. The particles or precursor is typically dispersed or dissolved in a concentration of 0.01 to 0.9% by weight, preferably 0.02 to 0.9% by weight, more preferably 0.05 to 0.5% by weight of metal oxide.

### Formation of protective layer

The protective layer is formed on the antireflective layer, using the protective layer-forming composition comprising the water-repellent fluorine-free organosilicon compound having a hydrolyzable group, or the protective layer-forming composition comprising metal oxide nanoparticles or a precursor which can be converted to metal oxide salt or metal oxide.

In forming the protective layer from the protective layer-forming composition comprising the water-repellent fluorine-free organosilicon compound having a hydrolyzable group, any of well-known techniques such as brush coating, dipping, spraying, bar coating and evaporation may be used. The heating means for evaporation treatment is not particularly limited and may be either resistance heating or EB heating.

After the protective layer is formed from the protective layer-forming composition comprising the water-repellent fluorine-free organosilicon compound having a hydrolyzable group, it is treated for cure. The cure treatment means exposure to an environment of temperature 20 to 200°C and relative humidity up to 95% for at least 1 minute. Cure treatment conditions may be set appropriate for a particular protective layer-forming method. For example, preferred conditions include 60 to 150°C, relative humidity up to 85% and 30 minutes to 4 hours in the case of direct coating (e.g., brush coating, dipping or spraying), and 25 to 150°C, relative humidity up to 85% and 30 minutes to 4 hours in the case of evaporation coating.

In forming the protective layer from the protective layer-forming composition comprising metal oxide nanoparticles or a precursor which can be converted to metal oxide salt or metal oxide, any of well-known techniques such as brush coating, dipping, spraying, bar coating and evaporation may be used. The heating means for evaporation treatment is not particularly limited and may be either resistance heating or EB heating.

After the protective layer is formed from the protective layer-forming composition comprising metal oxide nanoparticles, it is dried. Drying conditions include exposure to an environment at a temperature of 20 to 200°C and a relative humidity of up to 95% for at least 1 minute. Drying conditions may be set appropriate for a particular protective layer-forming method. For example, preferred conditions include 60 to 150°C, relative humidity up to 85% and 30 minutes to 4 hours in the case of direct coating (e.g., brush coating, dipping or spraying), and 25 to 150°C, relative humidity up to 85% and 30 minutes to 4 hours in the case of evaporation coating.

After the protective layer is formed from the protective layer-forming composition comprising a precursor which can be converted to metal oxide salt or metal oxide, reaction treatment is carried out. The reaction treatment is exposure to an environment at a temperature of 20 to 200°C and a relative humidity of up to 95% for at least 1 minute. The reaction treatment conditions may be set appropriate for a particular protective layer-forming method. For example, preferred conditions include 60 to 150°C, relative humidity up to 85% and 30 minutes to 4 hours in the case of direct coating (e.g., brush coating, dipping or spraying), and 25 to 150°C, relative humidity up to 85% and 30 minutes to 4 hours in the case of evaporation coating.

The protective layer may also be composed of two or more layers including a cured product layer of a water-repellent fluorine-free organosilicon compound containing a hydrolyzable group and a metal oxide layer. In this embodiment, the outermost layer is preferably a cured product layer of a water-repellent fluorine-free organosilicon compound containing a hydrolyzable group.

The protective layer preferably has a thickness of 1 to 10 nm, more preferably 1.5 to 5 nm. If the thickness of the protective layer is less than 1 nm, the surface coverage by the protective layer is sometimes so low that the antireflective layer is exposed, failing to provide durability. A thickness in excess of 10 nm may sometimes cause a large change of luminous reflectance to degrade antireflective film properties.

When the protective layer is a cured product layer of a water-repellent fluorine-free organosilicon compound containing a hydrolyzable group, the protective layer preferably has a thickness of 1 to 10 nm, more preferably 1.5 to 5 nm. If the thickness of the protective layer is less than 1 nm, the surface coverage by the protective layer is sometimes so low that the antireflective layer is exposed, failing to provide durability. A thickness in excess of 10 nm may sometimes cause a large change of luminous reflectance to degrade antireflective film properties.

When the protective layer is a metal oxide layer, the protective layer preferably has a thickness of 1 nm to less than 10 nm, more preferably 2 to 5 nm. If the thickness of the protective layer is less than 1 nm, the surface coverage by the protective layer is sometimes so low that the antireflective layer is exposed, failing to provide durability. A thickness of 10 nm or more may sometimes cause a large change of luminous reflectance to degrade antireflective film properties.

When the protective layer is composed of two or more layers including a metal oxide layer and a cured product layer of a water-repellent fluorine-free organosilicon compound containing a hydrolyzable group, the protective layer preferably has a thickness of 2 to 10 nm, more preferably 3 to 6 nm. If the thickness of the protective layer is less than 2 nm, the surface coverage by the protective layer is sometimes so low that the antireflective layer is exposed, failing to provide durability. A thickness in excess of 10 nm may sometimes cause a large change of luminous reflectance to degrade antireflective film properties.

It is noted that the thickness of the protective layer can be measured by X-ray reflectance measurement (XRR) or spectral ellipsometry.

Provided that the light-transmissive article of the invention has a luminous reflectance on its surface, a change of the luminous reflectance in the presence or absence of the protective layer (i.e., the absolute value of the difference of luminous reflectance before and after formation of the protective layer) is less than 0.5% (from 0% to less than 0.5%), preferably 0 to 0.3%. If the change of the luminous reflectance in the presence or absence of the protective layer is 0.5% or more, the reflectance change caused by the protective layer is non-negligible and influences the optical properties of the antireflective layer. In order that the change of the luminous reflectance in the presence or absence of the protective layer fall in the range, the thickness of the protective layer is preferably set within the above-defined range.

It is noted that the luminous reflectance can be determined by measuring spectral reflectance using a microscopic spectrophotometer and calculating according to the spectral colorimetry defined in JIS Z 8722: 2009.

The light-transmissive article further satisfies that a change of the luminous reflectance on the article surface before and after an alkali resistance test (i.e., the absolute value of the difference of luminous reflectance (%) before and after an alkali resistance test) is less than 1.0% (from 0% to less than 1.0%). If the change of the luminous reflectance on the article surface before and after an alkali resistance test is 1.0% or more, not only the protective layer, but also the antireflective layer are degraded, and even visibility is sometimes degraded. In order that the change of the luminous reflectance on the article surface before and after an alkali resistance test fall within the range, the thickness of the protective layer is preferably set within the above-defined range.

### [Alkali resistance test]

The alkali resistance test includes immersing an article sample (antireflective layer-bearing substrate having protective layer) in a test solution in the form of 0.4 wt% aqueous sodium hydroxide solution at 55°C, taking the sample out of the test solution after 3 hours, pouring pure water over the sample for 1 minute to remove the test solution, and blowing dry air to the sample to remove any water from the sample surface.

The light-transmissive article having the protective layer in the form of a cured product layer of a water-repellent fluorine-free organosilicon compound having a hydrolyzable group should preferably have a contact angle with water of at least 90°, more preferably 95 to 105° on the protective layer surface. If the contact angle with water on the protective layer surface is less than 90°, the surface coverage by the protective layer is sometimes so low that the antireflective layer is exposed, failing to provide durability. In order that the contact angle with water fall within the range, the thickness of the protective layer is preferably set within the above-defined range.

Also, the light-transmissive article having the protective layer in the form of a metal oxide layer should preferably have a contact angle with water of less than 65°, more preferably 10° to 50° on the protective layer surface. If the contact angle with water on the protective layer surface is 65° or more, the surface coverage by the protective layer is sometimes so low that the antireflective layer is exposed, failing to provide durability. In order that the contact angle with water fall within the range, the thickness of the protective layer is preferably set within the above-defined range.

Further, the light-transmissive article having the protective layer which is composed of two or more layers including a metal oxide layer and a cured product layer of a water-repellent fluorine-free organosilicon compound having a hydrolyzable group, the cured product layer of a water-repellent fluorine-free organosilicon compound having a hydrolyzable group presenting the outermost surface, should preferably have a contact angle with water of at least 90°, more preferably 95° to 105° on the protective layer surface. If the contact angle with water on the protective layer surface is less than 90°, the surface coverage by the protective layer is sometimes so low that the antireflective layer is exposed, failing to provide durability. In order that the contact angle with water fall within the range, the thickness of the protective layer is preferably set within the above-defined range.

It is noted that the contact angle with water is measured according to JIS R 3257: 1999.

The light-transmissive article of the invention is advantageously used in a variety of applications including windows, lenses, display covers and protective films used in mobile electronic equipment, household electric equipment, automobiles, outdoor gears, building materials, housing units and eyeglasses.

### EXAMPLES

Examples and Comparative Examples are shown below for illustrating the invention although the invention is not limited thereto. In Examples, the molar amount of a compound is calculated by dividing the measured weight of an objective compound by the molecular weight of a polymer analyzed by ¹H-NMR spectroscopy. The test environment conditions include 23°C and relative humidity 50%.

### [Example 1]

### [Alkaline cleaning of substrate]

A soda lime glass substrate was immersed in an alkaline cleaner solution (5 wt% aqueous dilution of SemiClean L.G.L by Yokohama Oils & Fats Co., Ltd.) and ultrasonic cleaned for 5 minutes. The substrate was then immersed in deionized water and ultrasonic cleaned for 6 minutes. The substrate was dried by injecting compressed air thereto to blow away any water.

### [Formation of antireflective layer]

Using a sputtering system, an antireflective layer of the type/thickness arrangement shown in Table 1 was deposited on the surface of the alkaline cleaned glass substrate under the conditions shown below. Low-refractive index layers were formed of SiO₂ and high-refractive index layers were formed of Nb₂O₅. Notably, oxygen plasma processing was carried out prior to the deposition of the antireflective layer. The rate of SiO₂ deposition was 0.3 nm/sec and the rate of Nb₂O₅ deposition was 0.4 nm/sec. The thickness of each layer was controlled in terms of deposition time.

**[Table 1]**

| | Thickness (nm) |
|---|---|
| Air | - |
| SiO₂ | 85 |
| Nb₂O₅ | 108 |
| SiO₂ | 34 |
| Nb₂O₅ | 12 |
| SiO₂ | 3 |
| Substrate | - |

### [Deposition conditions of antireflective layer]

### Sputtering system: RAS-1100B (Shincron Co., Ltd.)

### Oxygen plasma processing conditions during substrate pretreatment

| | |
|---|---|
| Oxygen gas flow rate: | 70 sccm (standard cubic centimeters) |
| Argon gas flow rate: | 100 sccm |
| Chamber pressure: | 0.1 Pa |
| RF supply power: | 3,000 W |
| Treating time: | 50 sec |

### Deposition conditions of low-refractive index layer

| | |
|---|---|
| Target material: | silicon |
| Argon gas flow rate: | 100 sccm |
| Chamber pressure: | 0.1 Pa |
| RF supply power: | 8,000 W |
| Deposition rate: | 0.3 nm/sec |

### Oxygen plasma processing conditions during low-refractive index layer deposition

| | |
|---|---|
| Oxygen gas flow rate: | 70 sccm |
| RF supply power: | 3,000 W |

### Deposition conditions of high-refractive index layer

| | |
|---|---|
| Target material: | niobium |
| Argon gas flow rate: | 100 sccm |
| Chamber pressure: | 0.1 Pa |
| RF supply power: | 5,000 W |
| Deposition rate: | 0.4 nm/sec |

### Oxygen plasma processing conditions during high-refractive index layer deposition

| | |
|---|---|
| Oxygen gas flow rate: | 70 sccm |
| RF supply power: | 3,000 W |

### [Measurement of luminous reflectance of antireflective layer-bearing glass substrate]

Using a micro-spectrophotometer (USPM-RU-W by Olympus Corp.), the spectral reflectance of the antireflective layer-bearing glass substrate at the antireflective layer surface was measured. The luminous reflectance was computed according to the spectrophotometry of JIS Z 8722: 2009.

### [Preparation of protective layer-forming composition 1]

A protective layer-forming composition 1 was prepared by dissolving octadecyltrimethoxysilane (Tokyo Chemical Industry Co., Ltd.) in propylene glycol monomethyl ether (PGME) to a concentration of 20% by weight.

### [Protective layer forming method 1]

The antireflective layer-bearing glass substrate was set in a resistance heating vacuum evaporation system (VTR-350M by Ulvac Inc.). In the resistance heating section, 12 µL of the protective layer-forming composition to be described below was dropped. The chamber was vacuum pumped. When the chamber pressure was reduced below 6×10⁻³ Pa, resistance heating was started. While the power supplied for resistance heating was adjusted such that the maximum evaporation rate might be 1.0 nm/sec or more as measured by a quartz oscillator film thickness meter which was spaced about 20 cm apart from the resistance heating section, resistance heating was continued for 300 seconds. After a standby time of 5 minutes for cooling, the system was opened to air. The antireflective layer-bearing glass substrate coated with a water-repellent fluorine-free organosilicon compound containing a hydrolyzable group was obtained.

The substrate was allowed to stand in an environment of 80°C and RH 80% for 4 hours, allowing the protective layer to cure. The antireflective layer-bearing glass substrate having a protective layer composed of the cured product of the water-repellent fluorine-free organosilicon compound containing a hydrolyzable group (i.e., light-transmissive article) was obtained.

### [Measurement of thickness of protective layer]

The thickness of the protective layer was measured by X-ray reflectivity analysis. Specifically, the thickness was determined by simulation fitting of the measured profile.

The measurement conditions are shown below.

| | |
|---|---|
| System: | SmartLab (Rigaku Corp.) |
| X-ray source: | rotating counter cathode (Cu), power 45 kV, 200 mA |
| Incident optical system: | Ge(111) asymmetric beam compressed crystal |
| Receiver solar slit: | 5.0° |
| Slit: | incident side IS = 0.05 mm |
| | receiver side RS1 = 0.1 mm, RS2 = 0.1 mm |
| Scanning conditions: | scanning axis 2θ/ω |
| | scanning rate 0.2°/min |
| Step width: | 0.002° |

### [Measurement of water contact angle on protective layer surface]

The contact angle with water of the protective layer was measured by a contact angle meter Drop Master (Kyowa Interface Science Co., Ltd.) according to JIS R 3257: 1999, specifically sessile drop method, droplet 2 µL and θ/2 analysis.

### [Measurement of luminous reflectance of antireflective layer-bearing glass substrate having protective layer]

As above, using a micro-spectrophotometer (USPM-RU-W by Olympus Corp.), the spectral reflectance of the antireflective layer-bearing glass substrate having the protective layer (i.e., light-transmissive article) at the protective layer surface was measured. The luminous reflectance was computed according to the spectrophotometry of JIS Z 8722: 2009.

### [Alkali resistance test]

The test included immersing the antireflective layer-bearing glass substrate having the protective layer (i.e., light-transmissive article) as an article sample in a test solution in the form of 0.4 wt% aqueous sodium hydroxide solution at 55°C, taking the sample out of the test solution after 3 hours, pouring pure water over the sample for 1 minute to remove the test solution, and blowing dry air to the sample to remove any water from the sample surface. Then the luminous reflectance was computed as above.

### [Comparative Example 1]

An antireflective layer-bearing glass substrate having a protective layer was prepared by the same method as Example 1 using protective layer-forming composition 1, except that the amount of the protective layer-forming composition was 50 µL, and similarly evaluated.

### [Example 2]

An antireflective layer-bearing glass substrate having a protective layer was prepared by the same method as Example 1 aside from using a protective layer-forming composition 2 shown below, and similarly evaluated.

### [Protective layer-forming composition 2]

In a reactor, 1.00 g (1.82×10⁻³ mol) of a compound having the formula (a): 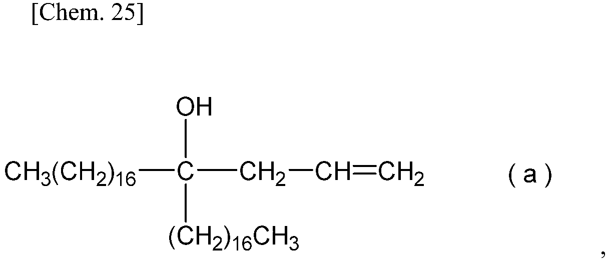 1.00 g of toluene, 0.667 g (5.46×10⁻³ mol) of trimethoxysilane, and 6.62×10⁻³ g (corresponding to 2.05×10⁻⁸ mol of elemental Pt) of toluene solution of chloroplatinic acid/vinylsiloxane complex were mixed and aged at 80°C for 24 hours. Thereafter, the solvent and unreacted reactants were distilled off under reduced pressure, obtaining a product.

On ¹H-NMR analysis, the resulting compound was found to have the structure of formula (A).

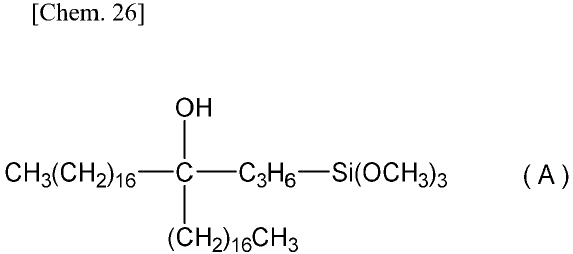

A protective layer-forming composition 2 was prepared by dissolving the compound of formula (A) in propylene glycol monomethyl ether (PGME) to a concentration of 20% by weight.

### [Comparative Example 2]

An antireflective layer-bearing glass substrate having a protective layer was prepared by the same method as Example 1 aside from using a protective layer-forming composition 3 shown below, and similarly evaluated.

### [Protective layer-forming composition 3]

A protective layer-forming composition 3 was prepared by dissolving hexyltrimethoxysilane (Tokyo Chemical Industry Co., Ltd.) in propylene glycol monomethyl ether (PGME) to a concentration of 20% by weight.

### [Example 3]

An antireflective layer-bearing glass substrate having a protective layer was prepared by the same method as Example 1 aside from using a protective layer-forming composition 4 shown below, and similarly evaluated.

### [Protective layer-forming composition 4]

In a reactor, 1.00 g (1.82×10⁻³ mol) of a compound having the formula (b): 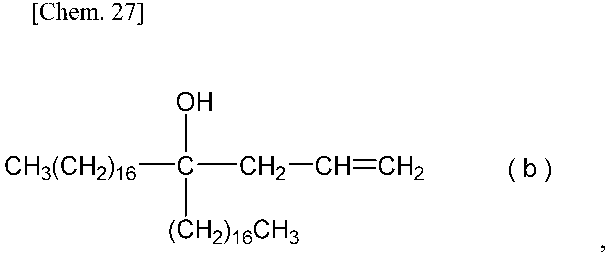 1.00 g of toluene, 0.74 g (5.46×10⁻³ mol) of trichlorosilane, and 7.54×10⁻³ g (corresponding to 2.33×10⁻⁸ mol of elemental Pt) of toluene solution of chloroplatinic acid/vinylsiloxane complex were mixed and aged at 60°C for 24 hours. Thereafter, the solvent and unreacted reactants were distilled off under reduced pressure. The product was mixed with 3.00 g of toluene and aged at room temperature for 6 hours while bubbling ammonia gas at a flow rate of 40 cc/min. After the mixture was filtered, the solvent and unreacted reactants were distilled off under reduced pressure, obtaining a product.

On ¹H-NMR analysis, the resulting compound was found to have the structure of formula (B).

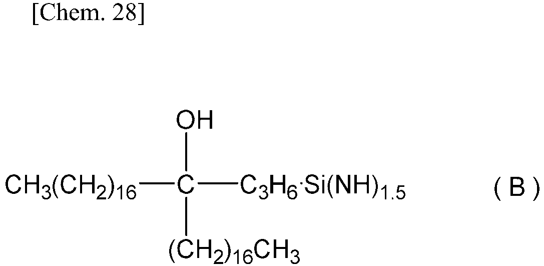

A protective layer-forming composition 4 was prepared by dissolving the compound of formula (B) in propylene glycol monomethyl ether (PGME) to a concentration of 20% by weight. Notably, formula (B) is the compositional formula of a polymer.

### [Example 4]

An antireflective layer-bearing glass substrate having a protective layer was prepared by the same method as Example 1 aside from using a protective layer-forming composition 5 shown below, and similarly evaluated.

### [Protective layer-forming composition 5]

A protective layer-forming composition 5 was prepared by dissolving 1,3-dioctadecyl-1,1,3,3-tetramethyldisilazane (CHEMFISH Tokyo Co., Ltd.) in propylene glycol monomethyl ether (PGME) to a concentration of 20% by weight.

### [Example 5]

An antireflective layer-bearing glass substrate having a protective layer was prepared by the same method as Example 1 except that a protective layer-forming composition 6 shown below was used and a protective layer was formed by protective layer-forming method 2 shown below. This was followed by similar evaluation.

### [Protective layer-forming composition 6]

A protective layer-forming composition 6 was a dilution of niobium oxide nanoparticles (Biral Nb-G6000 by Taki Chemical Co., Ltd.) in water (solids concentration 0.1 wt%).

### [Protective layer-forming method 2]

Dip coating was carried out under the following conditions to form a protective layer of metal oxide.

| | |
|---|---|
| Dipping time: | 30 seconds |
| Pull-up speed: | 0.5 mm/sec |
| Heating conditions: | 150°C, 30 minutes |

### [Example 6]

An antireflective layer-bearing glass substrate having a protective layer was prepared by the same method as Example 1 except that a protective layer-forming composition 7 shown below was used and a protective layer was formed by protective layer-forming method 2. This was followed by similar evaluation.

### [Protective layer-forming composition 7]

A protective layer-forming composition 7 was a dilution of ammonium zirconium carbonate (Beicoat 20 by Nippon Light Metal Co., Ltd.) in water (concentration 0.1 wt% calculated as zirconium oxide).

### [Comparative Example 3]

An antireflective layer-bearing glass substrate having a protective layer was prepared by the same method as Example 1 except that a protective layer-forming composition 8 shown below was used and a protective layer was formed by protective layer-forming method 2. This was followed by similar evaluation.

### [Protective layer-forming composition 8]

A protective layer-forming composition 8 was a dispersion of silicon oxide nanoparticles in water (average particle size 2 nm, solids concentration 0.1% by weight).

### [Comparative Example 4]

An antireflective layer-bearing glass substrate having a protective layer was prepared by the same method as Example 1 except that a protective layer-forming composition 9 shown below was used and a protective layer was formed by protective layer-forming method 2. This was followed by similar evaluation.

### [Protective layer-forming composition 9]

The protective layer-forming composition 9 was a dilution of niobium oxide nanoparticles (Biral Nb-G6000 by Taki Chemical Co., Ltd.) in water (solids concentration 0.1% by weight.

### [Comparative Example 5]

An antireflective layer-bearing glass substrate having a protective layer was prepared by the same method as Example 1 except that a protective layer-forming composition 10 shown below was used and a protective layer was formed by protective layer-forming method 2. This was followed by similar evaluation.

### [Protective layer-forming composition 10]

The protective layer-forming composition 10 was a dilution of ammonium zirconium carbonate (Beicoat 20 by Nippon Light Metal Co., Ltd.) in water (concentration 0.1% by weight calculated as zirconium oxide).

### [Example 7]

An antireflective layer-bearing glass substrate having two protective layers was prepared by forming an antireflective layer-bearing glass substrate having a protective layer as in Example 6, and forming a second protective layer thereon from protective layer-forming composition 1 as in Example 1. This was followed by similar evaluation.

### [Comparative Example 6]

An antireflective layer-bearing glass substrate was prepared as in Example 1 except that the protective layer was not formed. The antireflective layer-bearing glass substrate was measured for luminous reflectance and examined by the alkali resistance test as in Example 1.

For the antireflective layer-bearing glass substrates having a protective layer prepared in Examples 1 to 7 and Comparative Examples 1 to 5 and the antireflective layer-bearing glass substrate prepared in Comparative Example 6, the luminous reflectance of the antireflective layer-bearing glass substrate (luminous reflectance of the antireflective layer), the thickness of the protective layer, the water contact angle on the protective layer surface, the luminous reflectance of the antireflective layer-bearing glass substrates having a protective layer (luminous reflectance on the protective layer surface), and the alkali resistance test results (luminous reflectance after alkali resistance test) are shown in Table 2.

**[Table 2]**

| | Luminous reflectance of antireflective layer | Thickness of protective layer | Water contact angle on protective layer surface | Luminous reflectance on protective layer surface | Luminous reflectance after alkali resistance test |
|---|---|---|---|---|---|
| Example 1 | | 1.9 nm | 95° | 0.25% | 1.18% |
| Comparative Example 1 | | 11.0 nm | 98° | 0.83% | 1.03% |
| Example 2 | | 2.6 nm | 103° | 0.31% | 0.45% |
| Comparative Example 2 | | 1.6 nm | 95° | 0.24% | 2.80% |
| Example 3 | | 2.7 nm | 103° | 0.31% | 0.43% |
| Example 4 | | 2.1 nm | 100° | 0.29% | 1.12% |
| Example 5 | 0.22% | 3.0 nm | 45° | 0.23% | 1.18% |
| Example 6 | | 2.5 nm | 35° | 0.19% | 0.36% |
| Comparative Example 3 | | 2.4 nm | 29° | 0.21% | 2.26% |
| Comparative Example 4 | | 10.5 nm | 48° | 0.75% | 1.01% |
| Comparative Example 5 | | 11.5 nm | 36° | 0.81% | 0.87% |
| Example 7 | | 4.1 nm | 96° | 0.39% | 0.36% |
| Comparative Example 6 | | - | - | - | 2.95% |

### [Example 8]

A substrate having an antireflective layer and a protective layer was prepared by the same procedure as in Example 1 aside from using a silicone hard coated polycarbonate (HC/PC) plate of 100 mm x 50 mm x 3 mm thick (LEXAN MARGARD by Sebic) as a substrate.

For the antireflective layer-bearing HC/PC substrate having a protective layer, the antireflective layer-bearing HC/PC substrate had a luminous reflectance (luminous reflectance of antireflective layer) of 0.38%, the protective layer had a thickness of 1.9 nm, the water contact angle on the protective layer surface was 96°, the antireflective layer-bearing HC/PC substrate having a protective layer had a luminous reflectance (luminous reflectance on protective layer surface) of 0.40% and a luminous reflectance after alkali resistance test of 1.35%.

### [Example 9]

A substrate having an antireflective layer and a protective layer was prepared by the same procedure as in Example 5 aside from using a silicone hard coated polycarbonate (HC/PC) plate of 100 mm x 50 mm x 3 mm thick (LEXAN MARGARD by Sebic) as a substrate.

For the antireflective layer-bearing HC/PC substrate having a protective layer, the antireflective layer-bearing HC/PC substrate had a luminous reflectance (luminous reflectance of antireflective layer) of 0.38%, the protective layer had a thickness of 3.0 nm, the water contact angle on the protective layer surface was 44°, the antireflective layer-bearing HC/PC substrate having a protective layer had a luminous reflectance (luminous reflectance on protective layer surface) of 0.39% and a luminous reflectance after alkali resistance test of 1.30%.

The antireflective layer-bearing glass substrates having a protective layer and the antireflective layer-bearing HC/PC substrates having a protective layer obtained in Examples satisfy that the change of luminous reflectance before and after formation of the protective layer is within 0.5%, and the change of luminous reflectance before and after an alkali resistance test is within 1%.

## Claims

1. A light-transmissive article comprising a substrate having an outer surface, an antireflective layer of multilayer structure disposed on the outer surface of the substrate and composed of at least two materials having different refractive index, and a protective layer disposed on the outer surface of the antireflective layer and composed of a fluorine-free material,
the article having a luminous reflectance on its surface, a change of the luminous reflectance in the presence or absence of the protective layer is less than 0.5%, and a change of the luminous reflectance before and after an alkali resistance test is less than 1.0%.
[Alkali resistance test]
The alkali resistance test includes immersing an article sample in a test solution in the form of 0.4 wt% aqueous sodium hydroxide solution at 55°C, taking the sample out of the test solution after 3 hours, pouring pure water over the sample for 1 minute to remove the test solution, and blowing dry air to the sample to remove any water from the sample surface.

2. The light-transmissive article of claim 1 wherein the protective layer is a cured product layer of a water-repellent fluorine-free organosilicon compound containing a hydrolyzable group and/or a metal oxide layer.

3. The light-transmissive article of claim 2 wherein the water-repellent fluorine-free organosilicon compound containing a hydrolyzable group is selected from compounds having the formulae (1) to (3): 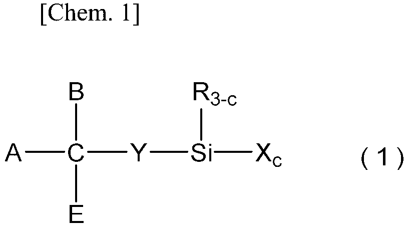 wherein A is a C₁-C₅₀ monovalent hydrocarbon group, B is hydrogen or hydroxy, E is hydrogen or a C₁-C₅₀ monovalent hydrocarbon group, the total number of carbon atoms in A and E is at least 12, Y is a single bond or a divalent hydrocarbon group which may contain at least one selected from silicon and siloxane bond, R is a C₁-C₄ alkyl group or phenyl group, X is independently a hydrolyzable group, c is 2 or 3, 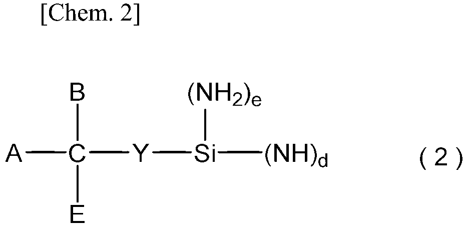 wherein A, B, E, and Y are as defined above, e is a number of 0 to 3, d is (3-e)/2; when e=3, formula (2) is the molecular formula of a monomer and when e<3, formula (2) is the compositional formula of a polymer, 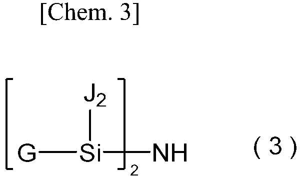 wherein G is independently a C₈-C₅₀ monovalent hydrocarbon group, and J is independently hydrogen, hydroxy or methyl.

4. The light-transmissive article of claim 1 or 2 wherein the protective layer is a cured product layer of a water-repellent fluorine-free organosilicon compound containing a hydrolyzable group and has a contact angle with water of at least 90° on its surface.

5. The light-transmissive article of claim 1 or 2 wherein the protective layer is a cured product layer of a water-repellent fluorine-free organosilicon compound containing a hydrolyzable group and has a thickness of 1 nm to 10 nm.

6. The light-transmissive article of claim 2 wherein the metal oxide is an oxide of at least one metal selected from zirconium, niobium, hafnium, and tantalum.

7. The light-transmissive article of claim 1 or 2 wherein the protective layer is a metal oxide layer and has a contact angle with water of less than 65° on its surface.

8. The light-transmissive article of claim 1 or 2 wherein the protective layer is a metal oxide layer and has a thickness of 1 nm to less than 10 nm.

9. The light-transmissive article of claim 1 or 2 wherein the protective layer is composed of at least two layers including a metal oxide layer and a cured product layer of a water-repellent fluorine-free organosilicon compound containing a hydrolyzable group, the cured product layer of a water-repellent fluorine-free organosilicon compound containing a hydrolyzable group provides the outermost surface of the protective layer, and the protective layer has a contact angle with water of at least 90° on its surface.

10. A method for improving the alkali resistance of a light-transmissive article comprising a substrate, an antireflective layer of multilayer structure disposed on the substrate and composed of at least two materials having different refractive index, and a protective layer disposed on the antireflective layer, wherein the antireflective performance of the article is restrained from changing,
the method comprising the steps of forming the protective layer from a cured product layer of a water-repellent fluorine-free organosilicon compound containing a hydrolyzable group and/or a metal oxide layer, and setting the protective layer to a thickness of 1 nm to 10 nm.

11. The method for improving the alkali resistance of a light-transmissive article whose antireflective performance is restrained from changing, according to claim 10 wherein the water-repellent fluorine-free organosilicon compound containing a hydrolyzable group is selected from compounds having the formulae (1) to (3): 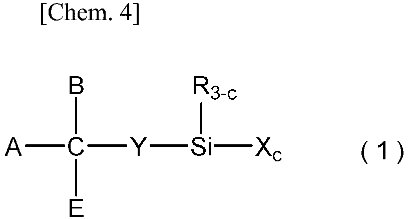 wherein A is a C₁-C₅₀ monovalent hydrocarbon group, B is hydrogen or hydroxy, E is hydrogen or a C₁-C₅₀ monovalent hydrocarbon group, the total number of carbon atoms in A and E is at least 12, Y is a single bond or a divalent hydrocarbon group which may contain at least one selected from silicon and siloxane bond, R is a C₁-C₄ alkyl group or phenyl group, X is independently a hydrolyzable group, c is 2 or 3, 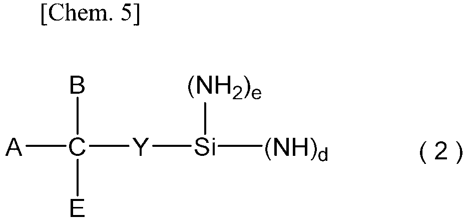 wherein A, B, E, and Y are as defined above, e is a number of 0 to 3, d is (3-e)/2; when e=3, formula (2) is the molecular formula of a monomer and when e<3, formula (2) is the compositional formula of a polymer, 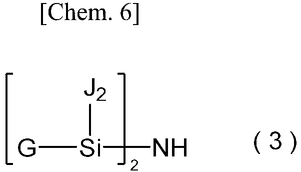 wherein G is independently a C₈-C₅₀ monovalent hydrocarbon group, and J is independently hydrogen, hydroxy or methyl.

12. The method for improving the alkali resistance of a light-transmissive article whose antireflective performance is restrained from changing, according to claim 10 wherein the metal oxide is an oxide of at least one metal selected from zirconium, niobium, hafnium, and tantalum.
